# EUROPEAN PATENT APPLICATION

(11) **EP 1 561 665 A2**
(43) Date of publication of application: **10.08.2005**
(21) Application number: 04107042.6
(22) Date of filing: 29.12.2004
(51) Int. Cl.: B62B 1/12

(54) **Folding shopping trolley**

(30) Priority: 30.01.2004 ES 200400195 U
(71) Applicant: Jaime Garcia Moll, S.L., 03700 Denia (ES)
(72) Inventor: Garcia Moll, Jaime, 03700 Denia (ES)
(74) Representative: Sanz-Bermell Martinez, Alejandro

(57) **Abstract**

Folding shopping trolley, with a retractable handle and wheels set in a frame (2.1,2.2) that are also retractable in a base or platform articulating said handle, in which the base or platform (1) has articulated devices (9) on an axle (11) set in said base or platform at its lower end, movement of which, by turning these to two end positions, fixes the wheel-holding frame (2.1,2.2) of the trolley in an unfolded position, said devices each having flexible extensions like gaffs (20) in an arm (17) able to be manually inserted into or removed from a corresponding hole or window (5.1,5.2) and be released by elastic pressure, set in a wall (5) in the base of the trolley or platform. This device also has a support wall (12,13) with an also corresponding acute extension (13) foldable against the frame (2.1,2.2) which holds each wheel in the unfolded position.

## Description

The technical sector of this invention is that of folding shopping trolleys, of the sort that can be extended to be used in transporting bags and items and which can be stored folded up occupying little space.

The problem with folding trolleys is that their articulations may be weak since these are precisely the points at which the folding action and effect of takes place. These trolleys thus tend to be formed of a base, a handle and a bag. The base which has the wheels is articulated on the handle so that a temporary but firm securing means has to be established in order for said base to be able to support the weight of the load which is placed in the bag.

Statement of the Prior State of the Art.

ES200002154P for a folding trolley for transporting packages, small inside, large outside. It includes a folding-retractable surface and a larger base, allowing two types of packages to be placed in it.

ES1012233U for a folding shopping trolley, consisting of a device fitted with two articulations, one in the base of the wheels and the other half way up the frame. The base has a locking/unlocking device consisting of an articulation of the frame which cooperates with a part that inserts into the bottom of the tube forming the handle, being retained by a spring, compression of which releases the handle.

ES1027206U by the same inventor as this application, for an enhanced device for folding shopping trolleys, consists of an articulated assembly and parallel extension of tubes, in which the wheel frames are secured by an L -shaped extension of the handle tube, which is articulated on this platform, so as to prevent the wheel from returning to the folding position.

The object of this invention is a folding shopping trolley with a device for securing the handle.

In order to make the following explanation clearer, four sheets of drawings are adjoined representing the essence of this invention in four figures.

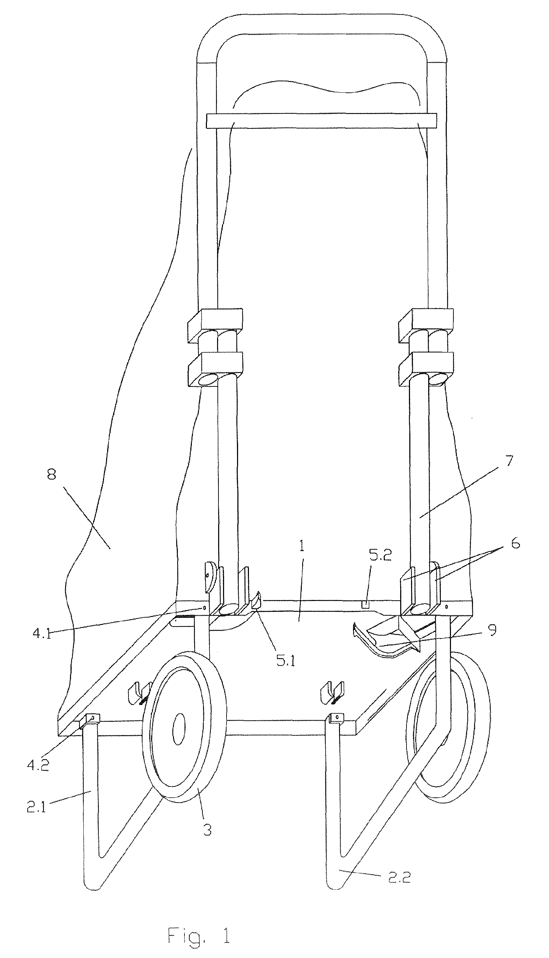

Figure 1 shows a perspective view of the bottom of the trolley.

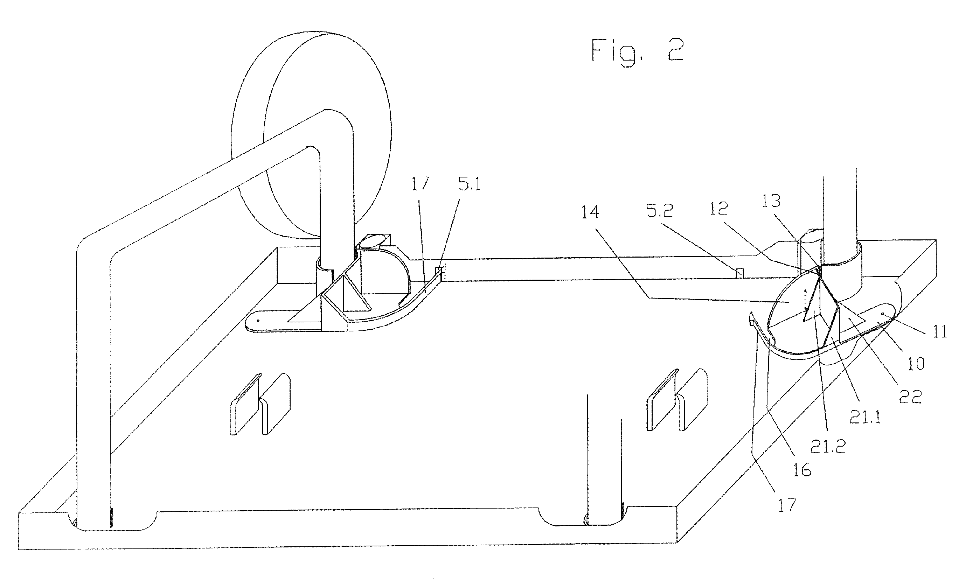

Figure 2 shows a view of the bottom of the trolley, in perspective, from a position opposite that of Figure 1.

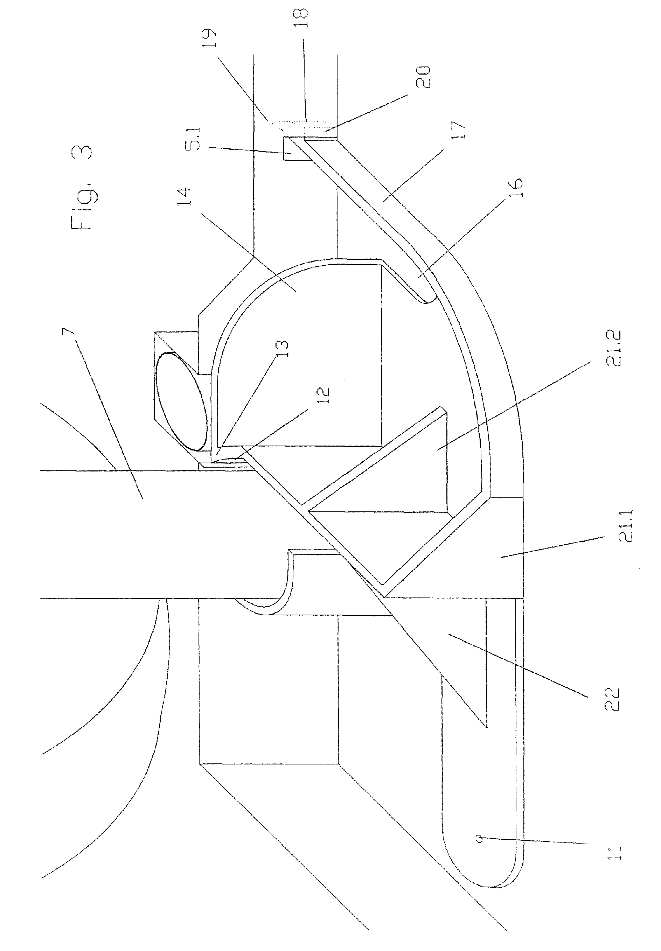

Figure 3 shows a detail of the locking device in locking position at the base of the trolley.

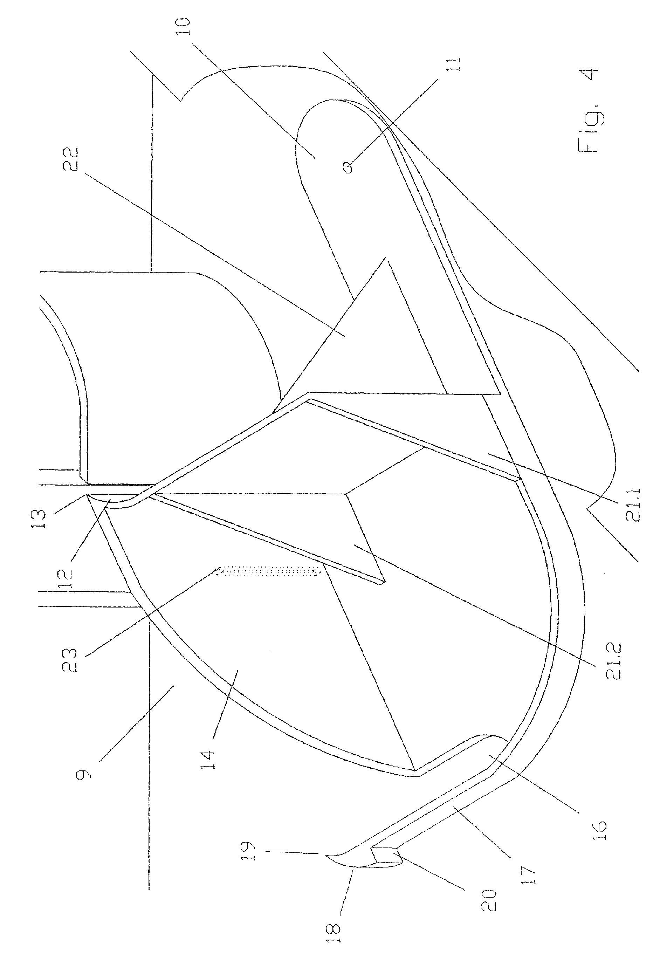

Figure 4 shows a detail of the locking device in the position released from the base of the trolley.

In these figures the numbers indicate the following items:
- 1: base of the trolley
- 2 .1: articulated wheel-holding frame
- 2.2: articulated wheel-holding frame
- 3: wheels
- 4.1: frame articulation axle 2.1
- 4.2: frame articulation axle 2.2
- 5: rear wall of the base of the trolley 1
- 5.1: hole or window for insertion of the end of the arm of the locking device
- 5.2: hole or window for inserting the end of the locking device arm
- 6: handle stabiliser
- 7: handle tubes
- 8: bag
- 9: locking device of the wheel-holder frames
- 10: arm of the locking device
- 11: axle/through-hole of the articulation axle of the locking device 9
- 12: wall for supporting the frame 2.1 or 2.2
- 13: prominent angle of the wall termination 12
- 14: wall
- 15: base
- 16: space between the base and the arm
- 17: arm
- 18: curved shape of the end of the arm 17
- 19: tip of the arm
- 20: gaff shape
- 21.1: bracket
- 21.2: bracket
- 22: bracket
- 23: wall reinforcement 14

### Explanation of one form of embodiment

The arrangement of the folding shopping trolley with device for securing the handle has a locking device at the base of the trolley allowing the frames 2.1 and 2.2 to be freely withdrawn; after these have reached a position perpendicular to the base of the trolley 1, these devices 9 slide around an axle 11 and reach a position in which their pointed end 19 in cooperation with the gaff shape 20 which is inserted in corresponding holes or windows 5.1 and 5.2, lock this device in the position secured to the hole or window 5.1 or 5.2. In this position the wall 12 of the device 9 supports the lateral pressure of the frames 2. The shape 13 clamps the tube of the frame 2 and secures this without clearance.

The device 9 has a base 15 with an edge on which the bracket 21.1 is joined and which is extended in the arm 17, defining between this base 15 and the arm 17 a space 16 which gives elasticity to this arm 17. The pointed end 19 matches the hole or window 5.1 and 5.2; the curved shape 18 rests on one side of the holes or windows 5.1 and 5.2, and the gaff-shaped space 20 remains on the outside of the wall 5, securing the assembly of the locking device. This assembly can be released by simple manual pressure on the tip 19 to separate this from the wall where the gaff shape 20 is locked. This way the frames can be easily secured and released.

The bracket 21.1 can be fitted with a spring (not shown) which, joined at the other end to the base 1 and to one of its lateral edges in particular, provides sufficient traction to separate the securing device and set this in the opposite position, with no need to move it manually.

It should finally be pointed out that the protection being requested is going to be materialised in a folding shopping trolley with a device for securing the handle, of the sort that have a retractable handle and wheels set in a frame which are also retractable in a base or platform which articulates this handle, in which the base or platform 1 has articulated devices 9 in an axle 11 set in said base or platform at its bottom, whose movement by turning to two end positions, secures the wheel-holding frame of the trolley in its unfolded position, said devices having an extension like a gaff 20 able to go into a corresponding hole or window 5.1, 5.2 set in a wall 5 of the base of the trolley or platform. This device also has a corresponding support wall 12, 13 foldable onto the frame 2.1, 2.2 which holds each wheel in the unfolded position; the ends 17, 18, 19, 20 for extension like gaffs 20 are flexible enough to be able to be released by pressure exerted on the end 18; the arm 17 whose end is in gaff shape 20 is spaced away from the base 15 of the device and this arm 17 is thus correspondingly longer; the wall 12 corresponding to the wheel-holder frame has an extension 13 in acute shape whose join with the wall 12 has a curve matching that of the tubes 2.1, 2.2 which holds said wheel-holder frame; the wall 12, 13 corresponding to the wheel-holder frame 2.1 or 2.2 has two reinforcements 21.1, 21.2 like brackets. In this system one of the two end positions of the locking device 9, the one corresponding to insertion of the gaff into the hole or window 5.1, 5.2 in the rear wall of the base 1, is achieved by a manual movement effort towards said insertion, and the return is done through the action of a band or spring joined from a wall of the base 1 to a part 14 of the device 9.

The invention can be used in industrial applications in manufacturing folding trolleys and in particular shopping trolleys.

## Claims

1. Folding shopping trolley with device for securing the handle, of the sort that have a retractable handle and wheels set in a frame which are also retractable in a base or platform which articulates said handle, **characterised in that** the base or platform (1) has articulated devices (9) in an axle (11) set in said base or platform at its lower end whose movement by turning to two end positions fixes the trolley's wheel-holder frame in unfolded position, said devices having two extensions like gaffs (20) able to be inserted in a corresponding hole or window (5.1, 5.2) set in a wall (5) of the base of the trolley or platform, and this device also having an also corresponding support wall (12, 13) foldable to the frame (2.1, 2.2) which holds each wheel in unfolded position.

2. Trolley, according to the previous claim, **characterised in that** the extension ends (17, 18, 19, 20) like gaffs (20) are flexible enough to be able to be released by pressure on one end (18).

3. Trolley, according to claims 1 and 2, **characterised in that** the arm (17) whose end is in gaff shape (20) is spaced away from the base (15) of the arm and the arm is correspondingly longer (17).

4. Trolley according to claim 1, **characterised in that** the wall (12), corresponding to the frame of the trolley has an acute-shaped extension (13) whose join with the wall (12) has a curve corresponding to that of the tubes (2.1, 2.2) which holds said wheel-holding frame.

5. Trolley, according to claim 1, **characterised in that** the wall (12, 13) corresponding to the wheel-holder frame (2.1 or 2.2) of the trolley has two reinforcements (21.1, 21.2) like brackets.

6. Trolley, according to claim 1, **characterised in that** one of the two end positions of the locking device (9), the one corresponding to the insertion of the gaff in the hole or window (5.1, 5.2) in the rear wall of the base (1) is achieved by a manual effort of movement towards said insertion and the return is done by the action of a band or spring joined from a wall of the base (1) to a part (14) of the device (9).
